# EUROPÄISCHE PATENTSCHRIFT

(11) **EP 4 148 292 B1**
(45) Veröffentlichungstag und Bekanntmachung des Hinweises auf die Patenterteilung: **29.05.2024**
(21) Anmeldenummer: 22193095.1
(22) Anmeldetag: 31.08.2022
(51) Int. Cl.: F16D 48/02, F16H 57/04, B60K 6/387, F16H 61/00, B60K 6/40, B60K 6/48

(54) **HYDRAULIKSYSTEM FÜR EINEN HYBRIDISCHEN ANTRIEB**
HYDRAULIC SYSTEM FOR A HYBRID DRIVE
SYSTÈME HYDRAULIQUE POUR UN ENTRAÎNEMENT HYBRIDE

(30) Priorität: 14.09.2021 DE 102021210168
(43) Veröffentlichungstag der Anmeldung: 15.03.2023
(73) Patentinhaber: Magna PT B.V. & Co. KG, 74199 Untergruppenbach (DE)
(72) Erfinder: NEUENDORF, Jens, 74199 Untergruppenbach (DE); OTT, Mario, 70825 Korntal-Münchingen (DE); GREMPLINI, Hansi, 74379 Ingersheim (DE)
(74) Vertreter: Rausch, Gabriele

(56) Entgegenhaltungen:
- WO-A1-2017/089073
- DE-A1-102018 214 440
- DE-A1-102019 124 355
- DE-A1-102019 204 858
- DE-B3-102021 209 400

## Beschreibung

Die Erfindung betrifft ein Hydrauliksystem.

### Stand der Technik

Doppelkupplungsgetriebe werden bevorzugt in Personenkraftwagen eingesetzt. Ein Doppelkupplungsgetriebe weist im Allgemeinen zwei koaxial zueinander angeordnete Getriebeeingangswellen auf, die jeweils einem Teilgetriebe zugeordnet sind. Jeder der Getriebeeingangswellen ist eine Kupplung zugeordnet, über die die Getriebeeingangswelle des jeweiligen Teilgetriebes kraftschlüssig mit dem Abtrieb eines Motors, eines Verbrennungsmotors eines Kraftfahrzeugs und/oder einer elektrischen Maschine, gekoppelt werden kann.

Während der Fahrt ist typischerweise eines der Teilgetriebe aktiv, was bedeutet, dass die diesem Teilgetriebe zugeordnete Getriebeeingangswelle über die ihr zugeordnete Kupplung mit dem Motor gekoppelt ist. In dem aktiven Teilgetriebe ist ein Gang eingelegt, der eine momentane Getriebeübersetzung bereitstellt. Eine Steuerung ermittelt, ob abhängig von der Fahrsituation der nächsthöhere oder nächstniedrige Gang eingelegt werden soll. Dieser voraussichtlich als nächstes verwendete Gang wird in dem zweiten, inaktiven Teilgetriebe eingelegt. Für einen Gangwechsel wird dann die Kupplung des inaktiven Teilgetriebes geschlossen, während die Kupplung des aktiven Teilgetriebes geöffnet wird. Bevorzugt wird, wenn sich das Öffnen der Kupplung des aktiven Teilgetriebes und das Schließen der Kupplung des inaktiven Teilgetriebes derart überschneiden, dass keine oder nur eine geringfügige Kraftflussunterbrechung vom Motor auf die Antriebswelle des Kraftfahrzeugs gegeben ist. In Folge des Gangwechsels wird das zuvor aktive Teilgetriebe inaktiv, während das zuvor inaktive Teilgetriebe zum aktiven Teilgetriebe wird. Anschließend kann in dem nun inaktiven Teilgetriebe der voraussichtlich als nächstes benötigte Gang eingelegt werden.

Üblicherweise wird die Kühlung der Kupplungen durch eine verbrennungsmotorisch angetriebene Konstantpumpe bedient. Für eine bedarfsgerechte Kupplungskühlung wird mindestens ein Steuer- beziehungsweise Regelventil verwendet. Dabei hängt die Genauigkeit des zur Kupplungskühlung benutzten Volumenstroms stark von dem verwendeten Steuer- beziehungsweise Regelventil ab. Üblicherweise wird das durch die Pumpe geförderte Hydraulikmedium durch einen Kühler gekühlt und anschließend einer den Kupplungen zugeordneten Kühlung zugeführt, sodass nur ein Kühlmedium-Volumenstrom für beide Kupplungen zur Verfügung steht. Die gemeinsame Kupplungskühlung verschlechtert dabei die Regelgüte der Kupplungen.

Kommen hybridisierte Getriebe zum Einsatz muss die elektrische Maschine gekühlt und in den Getriebestrang eingekuppelt werden können. Die elektrische Maschine ist dabei in einer P2- oder einer P2,5-Konfiguration an das Getriebe angeschlossen.

Zudem kommen Entkopplungseinheiten, Kupplungen K0 zwischen Verbrennungsmotor und Getriebe zum Einsatz, um rein elektrisches Fahren mit hybridisierten Getrieben zu vereinfachen.

Hydraulisch aktuierte Entkopplungseinheiten, Kupplungen K0 zwischen Verbrennungsmotor und Getriebe müssen, um ein weitgehend unabhängiges Systemverhalten aufzuweisen und über einen eigenständigen Hydraulikpfad angesteuert werden. Zur Aktuierung benötigen diese Kupplungen üblicherweise einen hohen Druck.

Insbesondere bei Getrieben mit Pumpenaktuierung, die keine klassische Vollhydraulik aufweisen, ist nach dem Stand der Technik ein zusätzlicher Motor und/oder ein zusätzlich steuerbares Ventil notwendig, um die Kupplung K0 zu betätigen.

Aus der DE 10 2015 214 998 A1 ist eine Betätigungsanordnung zur fluidischen Betätigung eines Kraftfahrzeugs bekannt mit mindestens einem Kupplungsaggregat zur Übertragung von Antriebsmomenten eines Kraftfahrzeugantriebs, und einem Verbrauchersystem eines Kraftfahrzeugs, umfassend mindestens eine Fluidpumpe zur Förderung eines Arbeitsfluids in einem Hydraulikkreislauf mit einer ersten Förderrichtung und einer Ventilanordnung mit einer ersten Schaltstellung zur Betätigung des Kupplungsaggregats und mit einer zweiten Schaltstellung zur Betätigung des Verbrauchersystems, wobei das Verbrauchersystem mindestens einen ersten Verbraucher und einen zweiten Verbraucher umfasst, wobei der erste Verbraucher eine Kupplung, insbesondere eine K0-Kupplung, Allradkupplung oder Differentialkupplung, ist, und der zweite Verbraucher eine Getriebeanordnung oder Parksperre ist.

Aus der DE 10 2018 204 084 A1 ist ein hydraulisches System bekannt, das als Aktuatorik- und Kühlungsanordnung für ein Getriebe mit wenigstens zwei elektrischen Maschinen und wenigstens zwei Freiläufen und einem ersten und mindestens einem zweiten Schaltelement dient, wobei das Getriebe wenigstens eine Zusatzpumpe für das erste und mindestens das zweite Schaltelement aufweist, und mit einer ersten Aktuatorpumpe um mindestens ein erstes Schaltelement und einer zweiten Aktuatorpumpe um mindestens ein zweites Schaltelement zu betätigen, wobei die wenigstens eine der beiden elektrischen Maschinen die Zusatzpumpe und die erste Aktuatorpumpe und/ oder die zweite Aktuatorpumpe betreibt, wobei wenigstens einer der beiden Freiläufe eingesetzt ist.

Aus der DE 10 2018 214 440 A1 ist einen Hydraulikanordnung für ein Doppelkupplungsgetriebe mit einzelnen Betätigungen der Kupplungen bekannt, wobei auch die Kühlung der Kupplungen über das System erfolgt.

DE 10 2019 204 858 A1 zeigt ein Hydrauliksystem zur Betätigung und Kühlung von Kupplungen.

Es ist Aufgabe der Erfindung, ein Hydrauliksystem für ein hybridisiertes Getriebe in einer P2 Konstellation vorzuschlagen, das auf einfache Weise Komponenten einspart, aber die sichere Betätigung der Kupplung K0 bei hoher Kühlleistung für die elektrische Maschine erlaubt.

### Beschreibung der Erfindung

Die Aufgabe wird gelöst mit einem Hydrauliksystem gemäß dem Anspruch 1.

Die Pumpenanordnungen umfassen die elektrisch angetriebenen Pumpen und vorzugsweise Filter, Rücklaufleitungen mit oder ohne Blenden, Drucksensoren und sind gegebenenfalls in Modulen angeordnet.

Es ist für die Abführung von Wärme wichtig, dass der hydraulische Teilkreis an einen Wärmetauscher zum Fahrzeug-Kühlsystem angeschlossen ist.

In einer Ausführungsform betätigt der hydraulische Teilkreis über eine Pumpverbindung, die über ein Druckregelventil an der Pumpe anliegt, die Kupplung K0, die die Trennkupplung zwischen Verbrennungsmotor und Getriebeeingang ist.

In einer vorteilhaften Ausgestaltung umfasst der Kühlkreislauf der elektrischen Maschine eine Aufteilung des Kühlstroms auf Rotor und Stator.

Es ist von Vorteil, wenn die Pumpe eine Tandempumpe ist, die einen großen Volumenstrom für den Kühlkreislauf der elektrischen Maschine zur Verfügung stellt und einen geringen Volumenstrom bei hohem Druck für die Aktuierung der Kupplung K0.

In einer Ausführungsform bedient der hydraulische Teilkreis den Kühlkreislauf der elektrischen Maschine und den Kühlkreislauf der Kupplungen mit Kühlöl.

In einer weiteren Ausführungsform enthält der hydraulische Teilkreis eine Anbindung an die Pumpenanordnungen zur Bereitstellung der Kühlung der Kupplungen.

### Beschreibung der Figuren

Figur 1 zeigt eine erste Ausführungsform mit mechanisch angebundener Pumpe zur Kupplungs-Aktuierung,
Figur 2 zeigt einen zweite Ausführungsform mit einem Hydraulikmodul und einer mechanischen Pumpe zur Kühlung,
Figur 3 zeigt einen dritte Ausführungsform zur Aktuierung der Kupplung K0, d.h. Trennkupplung (K0), mit Kühlung.

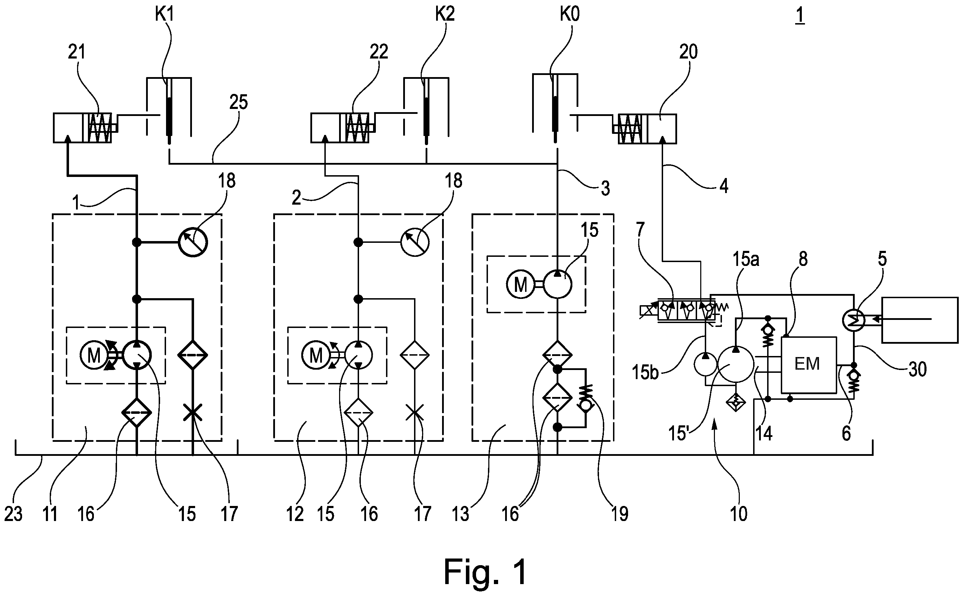

Figur 1 zeigte eine Hydraulikanordnung 1 schematisch dargestellt. Kupplungen K1 und K2 werden jeweils von Aktuatoren 21 oder 22 betätigt. Die Aktuatoren 21, 22 sind über Pumpverbindungen 1 und 2 hydraulisch an jeweils eine Pumpenanordnung 11 oder 12 angeschlossen. Die Pumpenanordnungen 11, 12 enthalten jeweils eine elektrisch betriebene Pumpe 15. Die elektrischen Pumpen 15 saugen Öl über Filter 16 aus einem Öltank 23 an. Die Pumpen 15 beaufschlagen über die Pumpverbindungen 1 und 2 Kolben in den Aktuatoren 21, 22 mit Druck und betätigen so die Kupplungen K1, K2.

Das Öl wird in den Pumpenanordnungen 11, 12 über parallel angeordneten Zusatzleckagen und Blenden 17 in den Öltank 23 zurückgefördert. Zudem ist jeweils ein Drucksensor 18 in den Pumpenanordnungen 11, 12 vorgesehen.

Zur Kupplungskühlung gibt es eine weitere Pumpenanordnung 13, die ebenfalls eine elektrisch angetriebene Pumpe 15 enthält. Über ein Filter 16 saugt die Pumpe 15 Öl aus dem Ölsumpf 23 und fördert Öl über eine Pumpverbindung 3 zu einem Verteiler 25, über den das Öl den Kupplungen K1 und K2, sowie einer Kupplung K0, einer Trennkupplung, zugeführt wird.

Die Kupplung K0 wird über einen hydraulischen Teilkreis 10 mit Druck beaufschlagt. Über eine Pumpverbindung 4 wird ein Aktuator 20 mit Druck beaufschlagt.

Der hydraulische Teilkreis 10 umfasst eine elektrische Maschine EM, die im Antriebssystem des Fahrzeugs in einer P2-Position verbaut ist. Die elektrische Maschine ist über eine mechanische Anbindung 14 mit einer Pumpe 15' verbunden. Die Pumpe 15' ist eine Tandempumpe mit einem Pumpenstrang 15a, der einen Volumenstrom mit geringem Druck für den Kühlkreislauf 30 für die elektrische Maschine EM zur Verfügung stellt. Der Kühlkreislauf 30 der elektrischen Maschine EM ist über einen Wärmetauscher 5 mit dem Kühlkreislauf des Fahrzeugs in Verbindung.

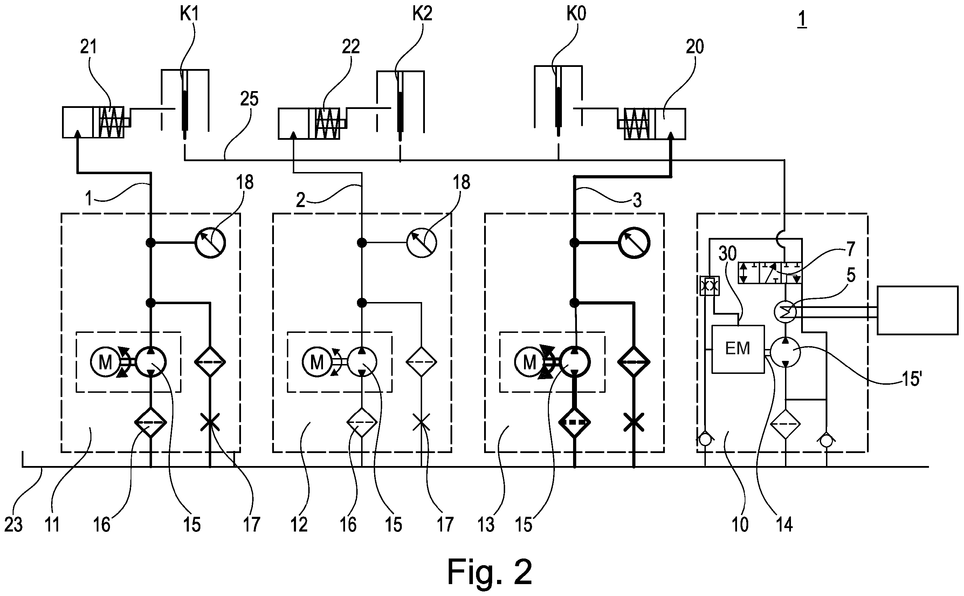

Alternativ kann der Kühlkreislauf 30 der elektrischen Maschine EM auch mit dem Kühlkreislauf der Kupplungen K1, K2, K0 verbunden sein, was eine hohe Kühlleistung bei hohen Drehzahlen ermöglicht (siehe Figur 2).

Ein weiterer Pumpenstrang 15b bedient mit geringen Volumina aber hohem Druck die Pumpverbindung 4 zum Aktuator 20, wobei ein Druckregelventil 7 zwischengeschaltet ist.

Damit wird über die mechanisch an die elektrische Maschine EM angeschlossenen Pumpe 15' ein Teil der Aufgaben des Hydraulikkreis 1 erledigt, nämlich die Betätigung der Kupplung K0.

Die Pumpenanordnung 13 kann allein für eine bedarfsgerechte Kühlung der Kupplungen sorgen.

Der Kühlkreislauf 30 ist über den Pumpstrang 15b und das Regelventil 7 mit der Rotorwelle 6 verbunden, sowie über den Pumpstrang 15a mit dem Stator 8 der elektrischen Maschine EM. Dabei wird der Volumenstrom von der Tandempumpe zu Stator 8 und Rotor 6 aufgeteilt, um Schleppverluste in der elektrischen Maschine EM zu reduzieren.

In einer Ausführungsform der Tandempumpe wird in einer Drehzahllimitierung die große Pumpe mit dem Pumpstrang 15a bei hohen Fahrzeuggeschwindigkeiten, z.B. über eine Fliehkraftlösung, entkoppelt.

Fährt das Fahrzeug sowohl mit dem Verbrennungsmotor als auch mit der in P2-Position an der Getriebeeingangswelle angeordneten elektrischen Maschine wird Aktuierungsenergie für die Kupplung K0 direkt vom Verbrennungsmotor bereitgestellt.

Figur 2 zeigt eine weitere Ausführungsform, in der die mechanisch angebundene Pumpe 15' sowohl die Kühlung der elektrischen Maschine EM als auch die Kühlung der Kupplungen K1, K2, K0 über den Verteiler 25 mit Öl versorgt.

Die Pumpe 15' ist im Kühlkreislauf 30 der elektrischen Maschine EM zunächst mit dem Wärmetauscher 5 und dem Schaltventil 7 verbunden.

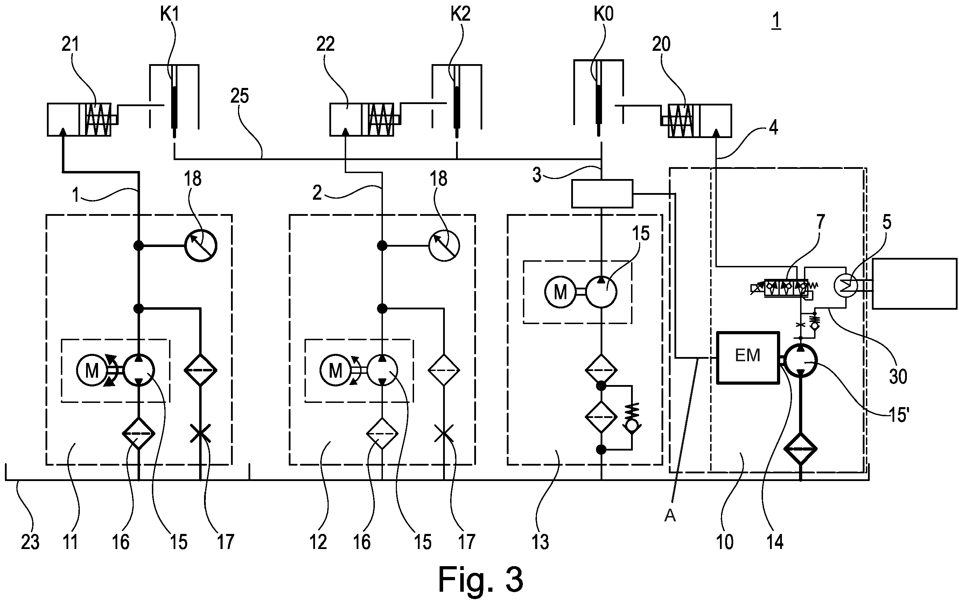

Figur 3 zeigt eine Ausführungsform mit einer mechanisch angetriebenen Pumpe 15', die zur Aktuierung der Kupplung K0 dient. Dazu wird über ein Druckbegrenzungsventil 7 der Druck der Pumpe 15' über die Pumpverbindung 4 auf den Aktuator 20 beaufschlagt. Zwischen der Pumpe 15' und dem Teilkreis 13 besteht eine Anbindung A.

In allen Ausführungsformen kann die mechanische Anbindung 14 der Pumpe an die elektrische Maschine EM über eine Kette, einen Zahnriemen, eine Zahnradpaarung oder eine Anbindung der Pumpe 15' axial an die Welle im on-shaft-Prinzip erfolgen.

## Patentansprüche

1. Hydrauliksystem (1) mindestens für die Betätigung von zwei Kupplungen (K1, K2) und einer Trennkupplung (K0) eines Hybridantriebs mit Verbrennungsmotor, mit einer elektrischen Maschine (EM), die in einer P2-Position verbaubar ist, und einem Doppelkupplungsgetriebe, mit zwei elektrisch getriebenen Pumpen (15) in Pumpenanordnungen (11, 12) für die Funktion der Aktivierung der Kupplungen (K1, K2) und eine dritte elektrische getriebene Pumpe (15) in einer weiteren Pumpenanordnung (13) für die Funktion der Aktuierung der Trennkupplung (K0) oder der Kühlung der Kupplungen (K1, K2) und der Trennkupplung (K0), **dadurch gekennzeichnet, dass** ein hydraulischer Teilkreis (10) des Hydrauliksystems die elektrische Maschine (EM) umfasst, die mechanisch eine weitere Pumpe (15') antreibt, wobei der hydraulische Teilkreis (10) zu der Funktion der Kühlung der elektrischen Maschine (EM) eine weitere Funktion wie Aktuierung der Trennkupplung (K0) oder Kühlung der Kupplungen (K1, K2) und der Trennkupplung (K0) erfüllt.

2. Hydrauliksystem (1) nach Anspruch 1, **dadurch gekennzeichnet, dass** der hydraulische Teilkreis (10) an einen Wärmetauscher (5) zum Fahrzeug-Kühlsystem anschließbar ist.

3. Hydrauliksystem (1) nach Anspruch 1 oder 2, **dadurch gekennzeichnet, dass** der hydraulische Teilkreis (10) eine Pumpverbindung (4) aufweist, die über ein Druckregelventil (7) an der Pumpe (15') anliegt, um die Trennkupplung (K0) zu betätigen.

4. Hydrauliksystem (1) nach einem der vorhergehenden Ansprüche, **dadurch gekennzeichnet, dass** der Kühlkreislauf (30) der elektrischen Maschine (EM) eine Aufteilung des Kühlstroms auf Rotor (6) und Stator (8) umfasst.

5. Hydrauliksystem (1) nach einem der vorhergehenden Ansprüche, **dadurch gekennzeichnet, dass** die Pumpe (15') eine Tandempumpe ist, die einen großen Volumenstrom für den Kühlkreislauf (30) der elektrischen Maschine (EM) zur Verfügung stellt und einen geringen Volumenstrom bei hohem Druck für die Aktuierung der Trennkupplung (K0).

6. Hydrauliksystem (1) nach einem der vorhergehenden Ansprüche 1 bis 4, **dadurch gekennzeichnet, dass** der hydraulische Teilkreis (10) den Kühlkreislauf (30) der elektrischen Maschine (EM) und den Kühlkreislauf der Kupplungen (K1, K2) und der Trennkupplung (K0) mit Kühlöl über einen Verteiler (25) bedient.

7. Hydrauliksystem (1) nach einem der vorhergehenden Ansprüche, **dadurch gekennzeichnet, dass** der hydraulische Teilkreis (10) eine Anbindung (A) an die Pumpenanordnung (13) zur Bereitstellung der Kühlung der Kupplungen (K1, K2) und der Trennkupplung (K0) enthält.

## Claims

1. Hydraulic system (1) at least for actuation of two clutches (K1, K2) and of a separating clutch (K0) of a hybrid drive with internal combustion engine and separating clutch (K0), having an electric machine (EM), which is able to be installed in a P2 position, and a dual-clutch transmission, having two electrically driven pumps (15) in pump arrangements (11, 12) for the function of activation of the clutches (K1, K2), and a third electrically driven pump (15) in a further pump arrangement (13) for the function of actuation of the separating clutch (K0) or cooling of the clutches (K1, K2) and the separating clutch (K0),
**characterized in that** a hydraulic sub-circuit (10) of the hydraulic system contains the electric machine (EM), which mechanically drives a further pump (15'), wherein the hydraulic sub-circuit (10) performs, in addition to the function of cooling of the electric machine (EM), a further function such as actuation of the separating clutch (K0) or cooling of the clutches (K1, K2) and the separating clutch (K0).

2. Hydraulic system (1) according to Claim 1, **characterized in that** the hydraulic sub-circuit (10) is able to be connected to a heat exchanger (5) to the vehicle cooling system.

3. Hydraulic system (1) according to Claim 1 or 2, **characterized in that** the hydraulic sub-circuit (10) has a pump connection (4), which is in contact with the pump (15') via a pressure control valve (7), to actuate the separating clutch (K0).

4. Hydraulic system (1) according to one of the preceding claims, **characterized in that** the cooling circuit (30) of the electric machine (EM) contains a means for dividing the cooling flow between a rotor (6) and a stator (8).

5. Hydraulic system (1) according to one of the preceding claims, **characterized in that** the pump (15') is a tandem pump, which provides a large volume flow for the cooling circuit (30) of the electric machine (EM) and a small volume flow at high pressure for actuation of the separating clutch (K0).

6. Hydraulic system (1) according to one of preceding Claims 1 to 4, **characterized in that** the hydraulic sub-circuit (10) supplies cooling oil to the cooling circuit (30) of the electric machine (EM) and to the cooling circuit of the clutches (K1, K2) and of the separating clutch (K0) via a distributor (25).

7. Hydraulic system (1) according to one of the preceding claims, **characterized in that** the hydraulic sub-circuit (10) contains a connection (A) to the pump arrangement (13) for provision of the cooling of the clutches (K1, K2) and of the separating clutch (K0).

## Revendications

1. Système hydraulique (1) destiné au moins à actionner deux embrayages (K1, K2) et un embrayage de séparation (K0) d'un entraînement hybride comprenant un moteur à combustion interne et un embrayage de séparation (K0), ledit système comprenant une machine électrique (EM) qui peut être installée dans une position P2, et une transmission à double embrayage, pourvue de deux pompes à entraînement électrique (15) dans des ensembles de pompes (11, 12) pour la fonction d'activation des embrayages (K1, K2) et d'une troisième pompe à entraînement électrique (15) dans un autre ensemble de pompe (13) pour la fonction d'actionnement de l'embrayage de séparation (K0) ou de refroidissement des embrayages (K1, K2) et de l'embrayage de séparation (K0),
**caractérisé en ce qu'**une partie de circuit hydraulique (10) du système hydraulique comprend la machine électrique (EM) qui entraîne mécaniquement une autre pompe (15'), la partie de circuit hydraulique (10) remplissant, en plus de la fonction de refroidissement de la machine électrique (EM), une autre fonction telle que l'actionnement de l'embrayage de séparation (K0) ou le refroidissement des embrayages (K1, K2) et de l'embrayage de séparation (K0).

2. Système hydraulique (1) selon la revendication 1, **caractérisé en ce que** la partie de circuit hydraulique (10) peut être raccordée à un échangeur thermique (5) relatif au système de refroidissement du véhicule.

3. Système hydraulique (1) selon la revendication 1 ou 2, **caractérisé en ce que** la partie de circuit hydraulique (10) comporte le biais d'un raccord de pompe (4) qui est en appui sur la pompe (15') par le biais d'une soupape de régulation de pression (7) afin d'actionner l'embrayage de séparation (K0).

4. Système hydraulique (1) selon l'une des revendications précédentes, **caractérisé en ce que** le circuit de refroidissement (30) de la machine électrique (EM) comprend une répartition du flux de refroidissement entre le rotor (6) et le stator (8).

5. Système hydraulique (1) selon l'une des revendications précédentes, **caractérisé en ce que** la pompe (15') est une pompe tandem qui assure un débit volumique important pour le circuit de refroidissement (30) de la machine électrique (EM) et un faible débit volumétrique à haute pression pour actionner l'embrayage de séparation (K0).

6. Système hydraulique (1) selon l'une des revendications précédentes 1 à 4, **caractérisé en ce que** la partie de circuit hydraulique (10) alimente le circuit de refroidissement (30) de la machine électrique (EM) et le circuit de refroidissement des embrayages (K1, K2) et de l'embrayage de séparation (K0) avec de l'huile de refroidissement par le biais d'un distributeur (25).

7. Système hydraulique (1) selon l'une des revendications précédentes, **caractérisé en ce que** la partie de circuit hydraulique (10) contient un raccordement (A) à l'ensemble de pompe (13) pour assurer le refroidissement des embrayages (K1, K2) et de l'embrayage de séparation (K0).
